# EUROPEAN PATENT SPECIFICATION

(11) **EP 2 719 041 B1**
(45) Date of publication and mention of the grant of the patent: **28.12.2016**
(21) Application number: 11727944.8
(22) Date of filing: 08.06.2011
(51) Int. Cl.: H02G 5/06, B23K 26/00, B29C 37/00

(54) **LASER TREATED ELECTRICALLY CONDUCTIVE SUBSTRATE AND PRE-TREATING METHOD THEREOF**
LASERBEHANDELTES ELEKTRISCH LEITENDES SUBSTRAT UND VORBEHANDLUNGSVERFAHREN DAFÜR
SUBSTRAT CONDUCTEUR D'ÉLECTRICITÉ TRAITÉ AU LASER ET SON PROCÉDÉ DE PRÉTRAITEMENT

(43) Date of publication of application: 16.04.2014
(73) Proprietor: ABB Research Ltd., 8050 Zürich (CH)
(72) Inventor: ZANT, Nikolaus, CH-8048 Zürich (CH); GUSTAFSSON, Emilia, CH-8003 Zürich (CH); VELTHUIS, Rudi, 79787 Lauchringen (DE); GASPARINI, Rico, CH-5408 Ennetbaden (CH); GREUTER, Felix, CH-5406 Baden-Rütihof (CH)
(74) Representative: ABB Patent Attorneys
(86) International application number: PCT/EP2011/059475
(87) International publication number: WO 2012/167821

(56) References cited:
- EP-A1- 0 676 842
- EP-A2- 1 347 466
- DE-A1- 2 050 769
- DE-A1-102007 023 418
- US-A- 3 996 414
- US-A1- 2010 320 579
- US-B2- 7 795 541

## Description

### TECHNICAL FIELD

The subject matter described herein relates generally to a method of pre-treating an electrically conductive substrate for bonding a non-metallic material thereon and, more particularly to a method of manufacturing a conductor assembly .

It likewise relates to an electrically conductive substrate prepared for bonding of a non-metallic material thereon as well as a metal insert for use with a solid insulation component, an insulator-conductor assembly, and a gas-insulated switchgear station.

In addition thereto it relates to the use of a treated electrically conductive substrate for bonding a non-metallic material thereon and, in particular, the use thereof in an electrical power system, e.g. in an electrical power transmission system such as, for example, a generator circuit breaker or a gas-insulated switchgear station.

### BACKGROUND OF THE INVENTION

The operating life of electrical components might be affected by mechanical strains appearing during operation of electrical systems. Such mechanical strains might be caused, for example, by thermal stresses produced during electrical operation. These mechanical strains might be particularly high in an electrical power system, e.g. an electrical power transmission system configured to carry electrical currents produced by high voltages such as, for example, a generator circuit breaker or a gas-insulated switchgear station.

One element, which might be particularly affected by mechanical strains, is the interface between an electrically conductive substrate and a non-metallic material mechanically bonded thereto. An example thereof is the bonding interface in an insulator-conductor assembly. Therefore, it is desirable that the insulator-conductor bonding interface is able to resist high mechanical strains. This applies in particular to assemblies configured to carry high electrical currents. One example of an electrical component where the compliance to mechanical strains should be particularly high is the insulator-conductor bonding interface of an assembly formed by a metallic insert and a cast epoxy insulator, e.g. for a reliable electric power transmission in high voltage applications.

In view thereof, an electrically conductive substrate, such as an aluminum substrate, might be etched or abrasively blasted prior to bonding a non-metallic material (e.g., an epoxy insulator) thereon in order to improve adhesion in the bonding interface. However, such methods generally present some drawbacks. For example, etching or abrasive blasting might not provide an appropriate adhesion in the bonding interface for some particular applications. Further, conventional pre-treatment methods may require the use of toxic substances, such as liquid acids for etching, which might be hazardous to health or the environment. In addition thereto, some of these methods might involve additional manufacturing steps, in particular cleaning steps, thereby increasing manufacturing costs.

Document DE 10 2007 023 418 A1 discloses a method of pre-treating an electrically conductive substrate for bonding a non-metallic material thereon by placing the substrate in a laser range of a laser source and by irradiating a surface of the substrate with a laser light from the laser source, thereby forming a micro-structure on the substrate surface.

Therefore, alternative methods for preparing an electrically conductive substrate for bonding a non-metallic material thereon are desirable as well as substrates for bonding a non-metallic material thereon with an appropriate bonding interface.

### BRIEF DESCRIPTION OF THE INVENTION

Embodiments described herein include a method of manufacturing a conductor assembly according to claim 1. The method includes: a) placing the substrate in a laser range of a laser source; and b) irradiating a surface of the substrate with a laser light from the laser source. Thereby, a micro-structure is formed on the substrate surface. The micro-structure has at least one of: a) an I/Ra ratio of at least 0.2 µm⁻¹, I being the surface index, Ra being the average roughness; or b) an I/Rz ratio of at least 0.03 µm⁻¹, I being the surface index, Rz being the average peak-to-valley distance.

According to the present disclosure, the surface index corresponds to the ratio of the real area of a surface (i.e., considering the additional area added by a micro-structure formed on the surface) to the flat area of the surface (i.e., an imaginary area of the surface without roughness). The surface index might be measured using a white light interferometer with a pre-determined magnification factor as further detailed in the description.

A pre-treatment according to the present disclosure is typically for preparing the substrate surface for bonding a non-metallic material thereon. Thereby, it is facilitated an appropriate bonding between an electrically conductive substrate and a non-metallic material.

An electrically conductive substrate is provided. The electrically conductive substrate includes a substrate surface configured for bonding a non-metallic material thereon. Furthermore, the substrate surface includes a laser induced micro-structure obtainable by irradiation with a laser light. The micro-structure has at least one of: a) an I/Ra ratio of at least 0.2 µm⁻¹, I being the surface index, Ra being the average roughness; or b) an I/Rz ratio of at least 0.03 µm⁻¹ I being the surface index, Rz being the average peak-to-valley distance.

An electrically conductive substrate according to embodiments herein is characterized by the morphology of the formed micro-structure. The inventors of the present disclosure have found that a laser induced micro-structure according to embodiments herein shows particular surface properties, which cannot be realized by other pre-treatment methods. For example, a laser induced micro-structure according to embodiments herein is typically characterized by rounded features. In particular, embodiments herein may show a reduced number of sharp edges as compared to microstructures produced by other pre-treatment methods such as abrasive blasting (also known as grit blasting, sandblasting, bead blasting, or media blasting).

Furthermore, the inventors of the present disclosure have surprisingly found that an electrically conductive substrate including a substrate surface having a laser induced micro-structure according to embodiments herein is typically less prone to electro-aging effects. In particular, as stated above, embodiments herein appears to produce a reduced number of sharp edges as compared to other pre-treatment methods. It seems that such sharp edges in the substrate surface may induce peak voltages during operation of the substrate as a conductor. These peak voltages may originate damages on the conductor caused by electro-thermal effects leading to electro-aging. Electro-aging may negatively affect the operational life of the electrically conductive substrate or other elements associated thereto. Therefore, a substrate manufactured according to embodiments herein facilitates a reliable operation of electric equipment. In view thereof, embodiments herein also contemplate the use of an electrically conductive substrate as described above in high voltage equipment.

A laser pre-treated electrically conductive substrate according to embodiments herein is used for bonding a non-metallic material thereon. A method of manufacturing a conductor assembly is provided. The conductor assembly includes an electrically conductive substrate and a non-metallic material. The manufacturing method includes pre-treating said electrically conductive substrate according to the method of pre-treating an electrically conductive substrate for bonding a non-metallic material thereon described above. The manufacturing method further includes bonding the non-metallic material to the surface of said electrically conductive substrate. Thereby, it is facilitated a relatively simple manufacturing process of a conductor assembly. Further, typically, such a manufacturing process does not require the use of toxic substances. Further, such a manufacturing process typically facilitates an appropriate bonding between the conductive substrate and the non-metallic material. In particular the bonding facilitates a sufficiently high adhesion and reduction of contaminant particles.

In other embodiments, an insulator-conductor according to claim 7 is provided. The insulator-conductor assembly includes an electrically conducting substrate as described above. In particular, the substrate includes a substrate surface having a laser induced micro-structure as described above. The insulator-conductor assembly further includes an insulator body of electrically insulating material bonded to the substrate surface. An assembly according to embodiments herein is typically less prone to electro-aging, so that the operating life of the assembly can be improved. In view thereof, embodiments herein also contemplate the use of an insulator-conductor assembly as described above in high voltage equipment.

In particular, an insulator-conductor assembly according to embodiments herein may be used in an electrical power system, e.g. an electric power transmission system such as, for example, a generator circuit breaker or a gas-insulated switchgear station. In some embodiments, a gas-insulated switchgear station including an insulator-conductor assembly as described above is provided. The electrically conductive substrate of the insulator-conductor assembly is configured for carrying an interruption current during a current interruption event. A gas-insulated switchgear station including an insulator-conductor assembly according to embodiments herein is typically less prone to suffer damages caused by high thermal stresses produced by an interruption current.

In yet another embodiment, a metal insert for use with a solid insulation component of a generator circuit breaker or a gas-insulated switchgear station is provided. The metal insert includes the electrically conductive substrate described above. The use of a metal insert according to embodiments herein typically facilitates a particularly reliable operation of a generator circuit breaker or a gas-insulated switchgear station.

Further aspects, advantages and features of the present invention are apparent from the dependent claims, the description and the accompanying drawings.

### BRIEF DESCRIPTION OF THE DRAWINGS

A full and enabling disclosure, including the best mode thereof, to one of ordinary skill in the art is set forth more particularly in the remainder of the specification, including reference to the accompanying figures wherein:
Figure 1 schematically shows a step in a method of pre-treating an electrically conductive substrate;
Figure 2 schematically shows an exemplary electrically conductive substrate according to embodiments herein;
Figure 3 is a flow chart illustrating an exemplary method of manufacturing a conductor assembly;
Figure 4 schematically shows a cross-section of an exemplary conductor assembly manufactured by the method of Figure 3;
Figure 5 schematically shows a portion of the conductor assembly of Figure 4;
Figure 6 schematically shows an disc-type insulator-conductor assembly; and
Figure 7 schematically shows a portion of an exemplary high voltage electrical power transmission system.

### DETAILED DESCRIPTION OF THE INVENTION

Reference will now be made in detail to various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

Within the following description of the drawings, the same reference numbers refer to the same components. Generally, only the differences with respect to the individual embodiments are described.

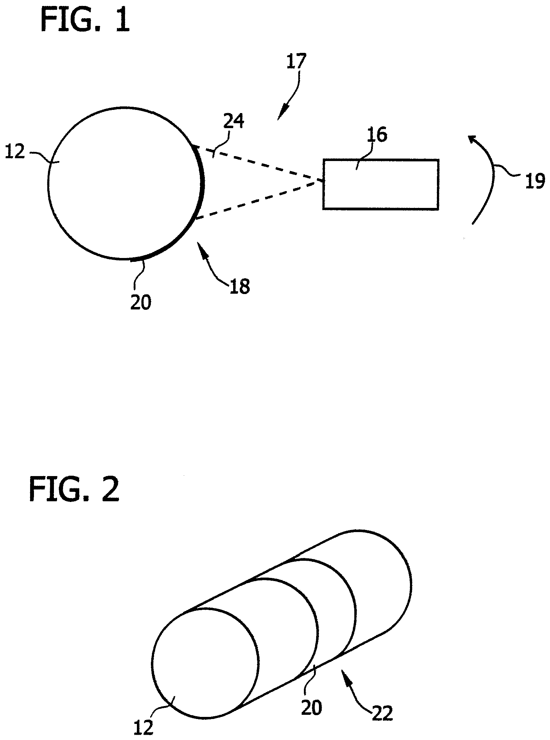

Figure 1 schematically shows an exemplary method of pre-treating an electrically conductive substrate 12. In the exemplary method, substrate 12 is placed in a laser range 17 of a laser source 16. Thereby, a surface 18 of substrate 12 can be irradiated with a laser light 24 from laser source 16. In the exemplary method, surface 18 of substrate 12 is pre-treated by irradiation with laser light 24.

Typically, substrate 12 and laser light 24 are displaced relative to each other for realizing pre-treatment of at least a portion of substrate 12. For example, laser light 24 may be scanned over the surface of substrate 12, as indicated by arrow 19. Alternatively, substrate 12 may be moved during irradiation for pre-treating an extended portion of the surface of substrate 12. Movement of substrate 12 may include a displacement along an axis and/or a rotation. Pre-treatment may include a combined displacement of substrate 12 and laser source 16 for irradiating an extended portion of substrate 12. For example, substrate 12 may be rotated while laser source 16 is scanned along a particular axis. Laser light 24 may be directly focused from laser source 16 onto surface 18. Alternatively, laser light 24 may be directed onto surface 18 through an appropriate waveguide (not shown).

According to embodiments herein, irradiation with laser light 24 produces a modification in the morphology of surface 18. In particular, irradiation typically causes formation of a micro-structure 20 on substrate surface 18. The formed micro-structure 20 is typically such that it may be observed in an optical microscope at magnifications in ranges of approximately x25 to x1500. It should be noted that surface 18 may already include a micro-structure before pre-treatment is performed, so that laser irradiation produces a modification of the previous micro-structure to form a new micro-structure according to embodiments herein. Furthermore, the irradiation with laser light may produce additional or alternative surface modifications on surface 18. In particular, the irradiation may produce a cleaning of the irradiated surface. Further, the irradiation may produce a chemical modification of surface 18.

Typically, the formed micro-structure is characteristic of the laser treatment described herein. In particular, the micro-structure 20 may have an I/Ra ratio of at least 0.2 µm⁻¹, I being the surface index, Ra being the average roughness. Alternatively, or in addition thereto, the micro-structure 20 may have an I/Rz ratio of at least 0.03 µm-1, I being the surface index, Rz being the average peak-to-valley distance, as further discussed below. A micro-structure formed according to embodiments herein cannot, generally, be formed using other pre-treatment methods such as abrasive blasting, passivation, anodization, corona treatment, etching or a combination thereof.

Typically, the effect of laser light 24 is restricted to the irradiated surface. Therefore, a pre-treatment method according to embodiment herein facilitates a selective pre-treatment, which is restricted to a bonding area of substrate 12. It should be noted that pre-treatment methods involving a bath treatment do not facilitate such a selective pre-treatment. This particularly applies to the treatment of geometrically complex substrates. A bath treatment generally involves submerging the entire component in a bath, so that the entire submerged surface is affected by the pre-treatment method. Pre-treatment methods involving a bath treatment include anodization and etching. Such pre-treatment methods would require the use of masks in order to selectively pre-treat substrate 12. This generally involves a complicated procedure. Furthermore, undesired pre-treatment of critical portions of substrate 12 may lead to a reduced performance during operation thereof. A pre-treatment method according to embodiments facilitates selective pre-treatment of substrate 12 with high spatial accuracy without requiring the use of masks.

In addition thereto, and in contrast to other pre-treatment methods, laser irradiation as described herein typically facilitates processing of substrates having any particular geometry. According to at least some embodiments herein, substrate 12 has a cylindrical geometry. Alternatively, substrate 12 may have any geometry required for a particular application such as, but not limited to, a planar, cylindrical, disk, or annular geometry. Depending on the particular application, a whole surface of substrate 12 may be pre-treated. Alternatively, a partial surface of substrate 12 may be pre-treated as illustrated in the following.

Figure 2 exemplarily shows an electrically conductive substrate 12 pre-treated according to embodiments herein. In the exemplary embodiment, only a middle-portion 22 of substrate 12 is pre-treated according to embodiments herein. Typically, but not limited to, only the portion of substrate 12 that is configured to be bonded to a non-metallic material is subjected to a pre-treatment according to embodiments herein. For example, the substrate 12 shown in Figure 2 may be used for bonding a non-metallic material (not shown) only at middle-portion 22.

The parameters for performing the irradiation of surface 18 with laser light 24 may be adjusted for meeting particular requirements. For example, the process parameters may be adjusted in view of the used substrate. Alternatively or in addition thereto, the process parameters may be adjusted in view of the particular application of the pre-treatment process such as, but not limited to, the non-metallic material to be bonded on substrate 12. Furthermore, the particular conditions to which the bonding interface will be subjected to during operation may be chosen to influence the properties of the bonding surface. The adjustable process parameters are, typically, one or more parameters selected from the group consisting of used laser, pulse spacing, pulse width, track pitch, beam spot velocity, laser output, pulse repletion rate, and number of overruns.

According to at least some embodiments herein, laser source 16 is a Nd/Yag laser source with a wavelength of 1064 nm. Alternatively, laser source 16 may be any type of laser source appropriate for generating a laser light that enables performing pre-treatment of substrate 12 according to embodiments herein such as, but not limited to, a CO₂ laser. Laser source 16 may be configured for emitting a laser beam having a Gaussian distribution. Such a distribution facilitates a melting of surface 18 caused by the focus of energy in the distribution peak. Furthermore, such a Gaussian distribution typically facilitates forming a structure on surface 18 for providing interlocking in the bonding interface between the metallic and the non-metallic materials.

Typically, laser source 16 is a pulsed laser source, i.e., a laser source operating by emission of pulses of laser light. Alternatively, laser source 16 may be a laser source operating in continuous mode. According to an embodiment, laser source 16 is a pulsed laser source with an average power output between 10 Watts and 200 Watts or, more specifically, of at least 20 Watts such as 20, 50, or 150 Watts. In an embodiment of a pulsed laser, the pulse frequency is in a range of about 40 kHz to 50 kHz. Such a laser output typically facilitates an appropriate pre-treatment of substrate 12.

As described above, laser source 16 may be movable in order to realize scanning of laser light 24. Accordingly, laser source 16 may be coupled to a movable support (not shown). For example, laser source 16 may be coupled to a scanner unit for displacing laser source 16 along one or more axes. Laser source 16 may be coupled to movable focusing means (not shown). Alternatively or in addition thereto, substrate 12 may be coupled to a scanning or rotating unit (not shown) for displacing substrate 12 relative to laser light 24. Typically, the beam spot velocity (i.e., the velocity at which substrate 12 and laser light 24 are displaced relative to each other) is pre-determined taking into account the power output of laser source 16. For example, the relative displacement may be such that a surface of between 0.20 and 0.70 cm² pro second, such as 0.50 cm² pro second, is irradiated. For such values, a 20 W pulsed laser light with pulse frequency of 40 kHz or 50 kHz might be used.

The surrounding conditions, at which the pre-treatment is being performed, such as surrounding gases, might be selected in order to influence the adhesion properties of irradiated surface 18. For example, a laser pre-treatment according to embodiments herein may be carried out in vacuum, air or in any other appropriate atmosphere such as, but not limited to, an atmosphere including oxygen, nitrogen, hydrogen or a mixture thereof.

According to embodiments herein, irradiation with laser light is such that substrate 12 is prepared for bonding a non-metallic material thereon. In particular, the laser irradiation modifies surface 18 thereby influencing the adhesion characteristics of substrate surface 18. In particular, this modification of surface 18 may be caused by the conversion of energy of laser light 24 into heat. The caused heat can induce evaporation of material adhered onto surface 18. Furthermore, the caused heat might induce melting, evaporation of material of substrate 12, and/or even induce chemical changes of substrate material. The laser induced modification of substrate surface 18 facilitates improving the adhesion properties at the bonding interface when a non-metallic material is bonded thereon.

According to at least some embodiments herein, laser irradiation of surface 18 results in a micro-structure 20 having an average roughness, Ra, of less than 10 µm. Such a roughness value is generally sufficient for providing treated surface 18 with an adequate adhesion without compromising electrical performance of the treated substrate. It should be taken into account, that an excessive roughness may induce the production of peak voltages in the micro-structure during operation of substrate 12 as a conductor. Such peak voltages may cause mechanical strains leading to a degradation of substrate 12 and/or non-metallic material bonded thereto.

Laser irradiation of surface 18 may result in a micro-structure 20 having an average roughness, Ra, between 0.4 and 10 µm. This range of average roughness may be particularly advantageous. In particular, this range facilitates a compromise between sufficient bonding adhesion due to a sufficiently high roughness) and reduction of voltage at the treated surface of substrate 12 due to a sufficiently low roughness) during operation thereof as an electrical conductor. Furthermore, the particularly rounded morphology of a typical micro-structure according to embodiments herein further facilitates reducing or avoiding the generation of peak voltages.

Alternatively or in addition thereto, the change of morphology of surface 18 induced by laser irradiation according to embodiments herein may be further reflected by a change in surface index, in particular by an increase thereof. Surface index corresponds to the ratio of the real area of surface 18 (i.e., considering the additional area added by the micro-structure) to the flat area of surface 18 (i.e., an imaginary area of surface 18 without roughness). Surface index might be measured using a white light interferometer with a pre-determined magnification factor. Depending on the measured surface, the magnification factor may influence the measured surface index. It should be noted that the surface index is related to the adhesion properties of a surface since it describes the available contact area of the surface. For further information regarding the significance of the surface index, it is referred to the work of Heiko Jupp "Ein Beitrag zum besseren Verständniss der Wirkungsweise des Strahlens auf die Festigkeit und Beständigkeit von Metallklbungen" published by Shaker Verlag (Aachen, Germany) in 1995.

A substrate pre-treated using laser irradiation according to embodiments herein is typically characterized by the ratio I/Ra between surface index I and average roughness, Ra, of the treated surface. In addition thereto, and according to embodiments herein, the substrate may also be characterized by the ratio between surface index and the Rz roughness value corresponding to average peak-to-valley distance of the treated surface.

According to at least some embodiments herein, laser irradiation of surface 18 results in a micro-structure 20 having a I/Ra ratio of at least 0.2 µm⁻¹. For some particular applications, an electrically conductive substrate with a pre-treated surface characterized by the above I/Ra ratio facilitates an appropriate bonding interface strength of an assembly including the substrate and a non-metallic material bonded thereto. It should be noted that a substrate pre-treated by other method generally shows values of the I/Ra ratio outside the above range. For example, an aluminum sample pre-treated by abrasive blasting may have a I/Ra ratio of 0.15 µm⁻¹.

According to at least some embodiments herein, laser irradiation of surface 18 results in a micro-structure 20 having a I/Rz ratio of at least 0.03 µm⁻¹. For some particular applications, an electrically conductive substrate with a pre-treated surface characterized by the above I/Rz ratio facilitates an appropriate bonding interface strength of an assembly including the substrate and a non-metallic material bonded thereto. It should be noted that a substrate pre-treated by other method generally shows values of the I/Rz ratio outside the above range. For example, an aluminum sample pre-treated by abrasive blasting may have a I/Rz ratio of 0.02 µm⁻¹.

The roughness values (Ra, Rz) included in this description are standardized in accordance with the EN ISO 4287 standard. These roughness values and surface index values of a substrate might be measured, for example, using a white light interferometer such as provided by the WYKO NT3300 Optical Profiler (Veeco, Tucson, AZ). Such a procedure is described in the dissertation by Stefan Emrich titled "Untersuchungen zum Einfluss von Oberflächenchemie und -morphologie auf die Langzeitbeständigkeit geklebter Aluminiumverbunde", University of Kaiserslauten, 2003; see in particular the parts thereof describing measurements of surface parameters such as Section 4.6.1.4. Further, the ratios I/Ra, I/Rz included in the present description correspond to surface index values as measured with a white light interferometer at a 5x magnification factor.

According to at least some embodiments herein, laser irradiation is such that surface 18 is substantially homogeneous. In particular, laser light 24 is such that a contaminant material on surface 18 is, at least partially, removed from surface 18 by the laser irradiation. Thereby, an adequate bonding of non-metallic material on surface 18 is facilitated. It should be noted that other pre-treatment method do not remove such a contaminant material or even increase the probability that surface 18 is inhomogeneous after being pre-treated. For example, an aluminum surface pre-treated by abrasive blasting typically contains Si, Ca, or O particles on the pre-treated surface.

According to at least some embodiments herein, laser irradiation is such that a layer of surface 18 is vaporized. Thereby, an underlying active layer of substrate 12 may be exposed. The term "active layer" refers to a layer containing material having a relatively high number of disrupted bonds at a surface of substrate 12. Typically, the exposed layer provides chemical properties of treated surface 18 enhancing the adhesion properties thereof. For example, laser irradiation on a substrate 12 comprised of aluminum may result on the exposure of active aluminum. Accordingly, pre-treatment of surface 18 according to embodiments herein may increase the number of disrupted bonds on surface 18.

Surface energy is typically related to the adhesion characteristics of a surface. The modification of substrate 12 by the laser irradiation may further result in an increase of the surface energy of the treated surface 18. Accordingly, a pre-treatment method according to embodiments herein may include increasing the surface energy of surface 18. This increase may be caused, for example, either by an increase of the surface index or by the increase of disrupted bonds on surface 18 described above. Surface energy may be quantified by measuring the angle at which a liquid/vapor interface meets the surface. Generally, an increase of surface energy is evidenced by a decrease of the contact angle.

Further, according to at least some embodiments herein, surface irradiation is such that a surface of a substrate (e.g., aluminum) has a surface energy of at least 25 mN/m such as a surface energy between 30 and 80 mN/m or, more specifically, between 60 and 80 mN/m as measured by contact angle analysis with a drop shape analyzer at ambient temperature and humidity. Such values may correspond to a mean value of a plurality of measurements (e.g., three measurements).

According to at least some embodiments herein, laser irradiation is such that a metal oxide layer is formed on surface 18. For some particular applications, a laser induced metal oxide layer on substrate 12 may facilitate an appropriate adhesion thereof.

According to embodiments herein, an electrically conductive substrate is a substrate that contains a relatively high number of movable electric charges (e.g., electrons), so that the conductor is able to carry an electrical current. In particular, substrate 12 may be a metal conductor such as, but not limited to, copper, aluminum, steel, or a combination thereof. For typical applications, aluminum may offer an appropriate performance.

Further, substrate 12 may be a metallic insert, which is typically adapted to be bonded to an insulator body for its use in an electrical system. Pre-treatment according to embodiments herein is typically performed on a surface of the metallic insert configured to form part of the bonding interface. Pre-treatment is performed, so that this surface is prepared for bonding the insulator thereon. Thereby, a metal insert facilitating appropriate adhesion and electrical characteristics of the bonding interface is provided. In particular, substrate 12 may be a threaded metal insert.

As already set forth above, a substrate pre-treated according to embodiments herein is particularly advantageous for applications in high voltage equipment, since it facilitates an appropriate adhesion in the bonding interface and is typically less prone to electro-aging effects as substrates pre-treated by other methods such as abrasive blasting. In particular, substrate 12 may be or form part of a core conductor adapted for carrying a nominal current in a high voltage electrical power system, e.g. a transmission system. The term "nominal current" is also referred to as rated current and denotes the maximum current that the transmission system can conduct without interrupting the circuit. A typical core conductor according to embodiments herein is adapted to carry a nominal current between about 0.1 kA and about 250 kA, in examples between about 2 kA and about 250 kA. Such nominal current generally poses high-requirements in the core conductor regarding mechanical reliability and operating life.

In an alternative embodiment omitted in the figures, the electrically conductive substrate is an electrically conductive structure adapted to control the electrical potential. In addition, the present invention is not limited to electrically conductive elements but might extend also to mechanical applications such as inserts for receiving bolts to be screwed therein or the like, which inserts may have mainly, or depending on the requirements even purely, mechanical function.

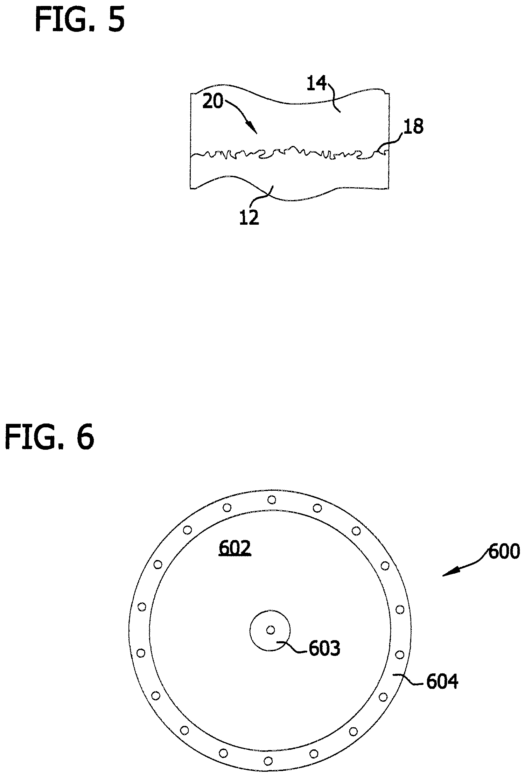

According to some embodiments explained in more detail hereinafter, substrate 12 is an electrode manufactured for being integrated into an epoxy insulating body forming part of a cable joints or cable ends. Further, according to some embodiments, substrate 12 may be an electrode for being casted into a disc-type insulator for enclosed high voltage equipment (see Figure 6 and corresponding description below). According to some embodiments, substrate 12 is an electrode for being integrated into a sealing end of a power transmission system. Such electrodes may be particularly adapted for being used in a gas-insulated switchgear (GIS) station or a generator circuit breaker.

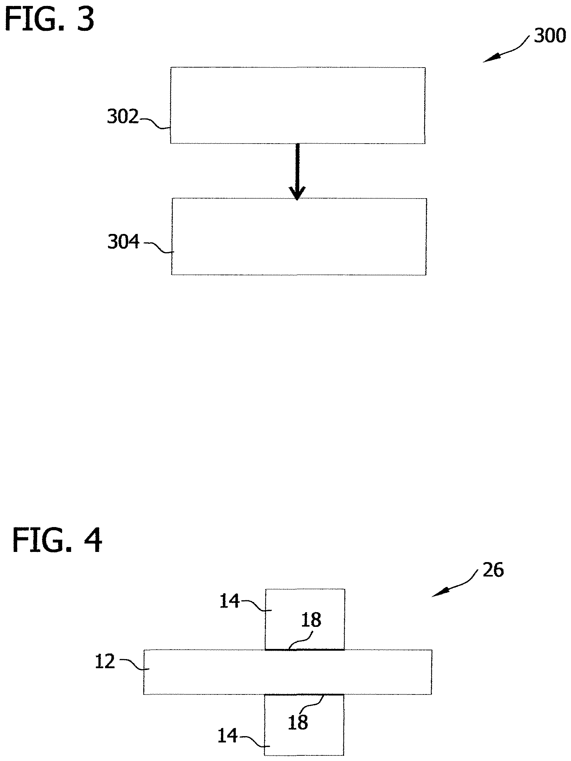

Figure 3 shows a method 300 of manufacturing a conductor assembly 26 (see Figure 4). Conductor assembly 26 includes an electrically conductive substrate 12 and a non-metallic material 14 bonded thereto. The method 300 includes pre-treating 302 electrically conductive substrate 12 according to an embodiment herein. Thereby, a substrate surface 18 is provided, at least partially, with a laser induced micro-structure, so that it is prepared for bonding non-metallic material 14 thereon. Method 300 further includes bonding 304 non-metallic material 14 to, at least, treated surface 18. A conductor assembly according to embodiments herein typically has an appropriate adhesion at the bonding interface between substrate 12 and non-metallic material 14. As further detailed below, conductor assembly 26 may constitute an insulator-conductor assembly, in which non-metallic material 14 forms an insulator body comprised of electrically insulating material bonded on treated substrate surface 18.

Bonding may include any appropriated method that enables to manufacture a conductor assembly as described herein. For example, bonding of non-metallic material 14 on electrically conductive substrate 12 may include any of molding, painting, extruding, casting, or adhering with an adhesive material. In some particular applications, such as applications related to high voltage equipment, bonding may be realized by casting a treated substrate 12, for example a treated aluminum electrode, in a non-metallic material, for example an epoxy insulator.

It should be noted that the surface modifications induced by a pre-treatment method, such as an increase of surface energy, may degrade with time. Therefore, it might be advantageous to perform the bonding step 304 within a relatively short-time period from the pre-treatment step 302. In particular, according to some embodiments herein, bonding 304 of non-metallic material 14 to electrically conductive substrate 12 is performed within less than 10 or, more specifically, within less that 5 days or, even more specifically, within less than 2 days after pre-treatment 302.

Typically, non-metallic material 14 is an electrically insulating material such as, but not limited to, a polymeric composite or a thermoplastic material. Further, electrically conductive substrate 12 is typically an insert. That is, as exemplarily illustrated in Figure 4 where non-metallic material 14 is bonded such that substrate 12 is at least partially immersed (i.e., embedded) in non-metallic material 14.

According to typical embodiments herein, conductor assembly 26 is adapted for use as a solid insulation component in an electrical power transmission system. For example, conductor assembly may be a component for a generator circuit breaker or a GIS station, such as, but not limited to a cable joint with an electrode integrated in an insulating body (e.g., an epoxy body) or an insulator (e.g., an epoxy) with casted in electrode. In such embodiments, electrically conductive substrate 12 constitutes a metal insert 28 and non-metallic material 14 constitutes an insulator body.

Figure 5 shows a portion of the exemplary conductor assembly of Figure 4 illustrating the bonding interface between electrically conductive substrate 12 and non-metallic material 14. Substrate 12 includes a laser induced micro-structure 20 formed according to embodiments herein. Figure 5 illustrates the roughness of micro-structure 20. This roughness, amongst other surface modification provided by laser irradiation as detailed above, typically enhances adhesion at the illustrated bonding interface. As set forth above, and in contrast to substrates pre-treated by other methods such as abrasive blasting, micro-structure 20 is typically characterized by rounded features, which facilitate, at least partially, avoiding the generation of extreme voltages during operation of assembly 26 as conductor in an electrical system.

As schematically illustrated in Figure 5, the portion of non-metallic material 14 bonded to surface 18 may be formed substantially complementary to micro-structure 20. This typically enhances adhesion at the bonding interface due to an efficient utilization of the contact area.

The bonding interface of a conductor assembly according to embodiments herein typically provides appropriate shear strength and tensile strength of the assembly.

According to embodiments, a conductor assembly is manufactured with a shear strength of at least 10 MPa or, more specifically a shear strength of at least 20 MPa, such as 26 MPa. In these embodiments, the substrate may include aluminum, and the non-metallic material may include epoxy bonded at a treated surface of aluminum. Shear strength may correspond to the shear strength measured by: a) a sample being 25 mm wide, with an aluminum substrate being 4 mm thick and an epoxy bonded thereto having 10 mm thickness and an overlap length of 12.5 mm; and b) using testing parameter substantially according to the ASTM D1002-05 standard and avoiding bending due to sample geometry.

According to embodiments, a conductor assembly is manufactured with a tensile strength of at least 20 MPa or, more specifically a tensile strength of at least 60 MPa, such as 80 MPa. In these embodiments, the substrate may include aluminum, and the non-metallic material may include epoxy bonded at a treated surface of aluminum. Tensile strength may correspond to the tensile strength measured by using samples consisting of a surface treated aluminum rod casted in a preheated epoxy mould, the cylinder having an a conical angle of one degree for facilitating demoulding. The tensile strength might be measured using an appropriate testing apparatus such as, but not limited to, a Zwick 100 kN machine.

As set forth above, the present disclosure contemplates use of a conductor assembly according to embodiments herein, in particular of an insulator-conductor assembly, in an electrical power transmission system. Generally, a conductor assembly according to embodiments herein may constitute any component in an electrical power transmission system, including a bonding interface formed between a substrate pre-treated as described in the present disclosure and an insulator body. Thereby, reliability in the operation of the system may be improved, in particular, when these components are configured to carry high electrical currents.

In particular, embodiments herein may be used in a generator circuit breaker or a gas-insulated switchgear station. For example, but not limited to, a conductor assembly as described herein may constitute a cable joint or a cable end, in which a connecting electrode pre-treated to embodiments herein is bonded to an epoxy insulating body. As another non-limiting example, an insulator-conductor assembly according to embodiments herein may constitute a disc-type insulator with a cast-in electrode. The latter example is further illustrated in the following.

Figure 6 exemplarily shows an insulator-conductor assembly 600 including a disc-type insulator 602 surrounded by a metal mounting ring 604. This disc-type insulator 602 may be configured, basically, as a disc-shaped or conical body, made, for example, of epoxy resin containing an inorganic filler. The body of disc-type insulator 602 contains a metallic insert in the form of a cast-in electrode 603. The metallic insert is a pre-treated substrate according to embodiments herein. Cast-in electrode 603 is configured to carry an electrical current.

Typically, insulator-conductor assembly 600 is for a high voltage cable of the type in which a central conductor is supported by assembly 600 and connected to cast-in electrode 603. Such an assembly, and in particular the bonding interface between insulator 602 and electrode 603 is subjected to relatively high mechanical strains as a result of thermal stressing during operation. Embodiments herein facilitate a reliable operation of assembly 600.

Insulator-conductor assembly 600 may be manufactured by a pre-treatment step as described herein combined with any appropriate method such as, but not limited to, the methods described in the US patent with publication number 4,562,303 or the US patent application with publication number 2004/0020685.

Embodiments herein include a high voltage electrical power transmission system, in which one or more insulator-conductor assembly according to the present disclosure is provided. For example, but not limited to, the high voltage electrical power transmission system may be a generator circuit breaker or a gas-insulated switchgear station. The latter example is further illustrated in the following.

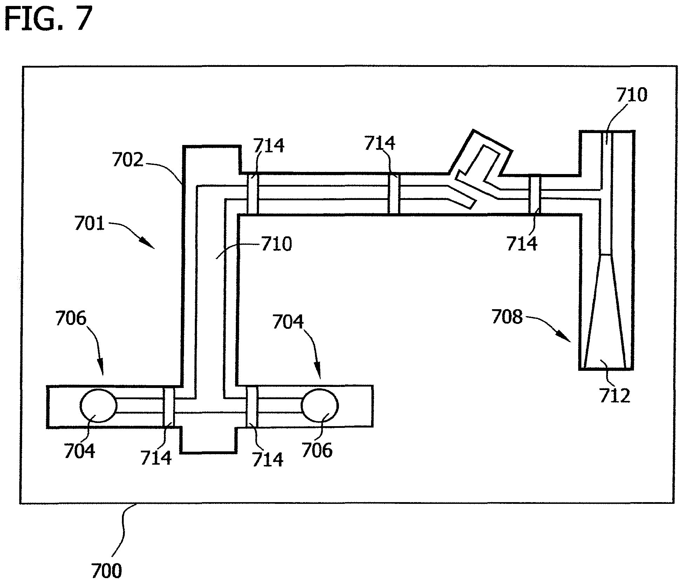

Figure 7 schematically shows a portion of an exemplary high voltage electrical power transmission system 700. In particular, system 700 is a gas-insulated switchgear station. System 700 includes a metal-encapsulated, gas-insulating switching installation 701. System 700 typically includes a metal supporting frame 702 and bus bars 704, 706. Switching installation 701 typically includes an interruption line 710 configured to carry an interruption current during a current interruption event. According to some embodiments, system 700 is configured for interrupting a fault current between 40 kA and 600 kA. A fault current may also referred to as short time current by show line fault (SLF), basic insulation current limit (BIL), or terminal fault current by terminal line fault (TFL).

Bus bars 704, 706 may include an insulator-conductor assembly according to embodiments herein. Thereby, bus bars 704, 706 may include an electrode for connecting an external line (not shown) to interruption line 710. The electrode is integrated into a disc-type insulator for mechanically coupling the electrode to supporting frame 702 without compromising electrical isolation thereof.

Switching station 701 may further include a plurality of insulating supports 714 of disc-type insulator with integrated electrodes according to embodiments herein for mechanically coupling interruption line 710 while providing electrical insulation. In particular, insulating supports 714 may be configured as a disc-type insulator-conductor assembly as shown in Figure 6. System 700 may further include a cable connection part 708 for connecting interruption line 710 to an outgoing high voltage cable (not shown). Cable connection part 708 may include an end-connection assembly 712 constituted also as an insulator-conductor assembly according to embodiments herein. In addition thereto, other elements of system 700 not illustrated in Figure 7 may be constituted as a conductor-insulator assembly according to embodiments herein.

Providing elements of system 700 constituted as an insulator-conductor assembly according to embodiments herein facilitates an appropriate adhesion of the bonding interface between the integrated electrodes and the insulator parts. Thereby, these elements might better comply with thermal stresses during operation of system 700. Furthermore, embodiment herein facilitates a reduction of electro-aging effects on, for example, but not limited to, bus bars 704, 706, insulating supports 714, and/or end-connection assembly 712. Thereby, the operational life of system 700 might be improved.

Exemplary embodiments of systems and methods for pre-treating an electrically conductive substrate are described above in detail. Typically, embodiments herein facilitate a proper bonding between the conductive substrate and the non-metallic material since the irradiation with laser light typically produces a substrate surface alteration on the substrate facilitating a proper adhesion in the interface. Furthermore, a laser pre-treatment facilitates a consistent pre-treatment of an electrically conductive substrate for bonding of a non-metallic material thereon since: a) the process parameter may be accurately controlled, and b) process repeatability is relatively high. In addition thereto, a pre-treatment based on laser irradiation does not typically require use of hazardous materials.

From the foregoing, it can be inferred that embodiments of the present disclosure facilitate achieving in a consistent manner an improvement in the quality of an insulator-conductor bonding interface while reducing process complexity, process cost and environmental impact. Furthermore, laser-light pre-treatment is typically faster than other pre-treatment methods such as, abrasive blasting and etching. Furthermore, a pre-treatment method according to embodiments herein might be typically implemented such that modification of the substrate is restricted to the substrate surface and the substrate bulk material remains unaffected by the pre-treatment. Furthermore, a pre-treatment method according to embodiments herein typically reduces the use of residues and consumables as compared to other pre-treatment methods such as abrasive blasting and etching. In addition thereto, the environmental impact of methods herein is typically low since the use of hazardous materials is reduced or even avoided.

The systems and methods are not limited to the specific embodiments described herein, but rather, components of the systems and/or steps of the methods may be utilized independently and separately from other components and/or steps described herein. Rather, the exemplary embodiment can be implemented and used in connection with many other applications, in particular with high-voltage equipment.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims.

## Claims

1. A method of manufacturing a conductor assembly (26), said conductor assembly including an electrically conductive substrate (12) and a non-metallic material (14), said method comprising:
- pre-treating said electrically conductive substrate (12) by placing the substrate (12) in a laser range of a laser source (16), and by irradiating a surface (18) of the substrate (12) with a laser light (24) from the laser source (16), thereby forming a micro-structure (20) on the substrate surface (18), wherein the micro-structure (20) has at least one of:
a) an I/Ra ratio of at least 0.2 µm⁻¹, I being the surface index, Ra being the average roughness; or
b) an I/Rz ratio of at least 0.03 µm⁻¹, I being the surface index, Rz being the average peak-to-valley distance; and
- bonding said non-metallic material (14) to the surface (18) of said electrically conductive substrate (12), wherein the bonding includes one of molding, painting, extruding, casting said non-metallic material (14) on said electrically conductive substrate (12), wherein
said electrically conductive substrate (12) is a core conductor adapted for carrying a nominal current in a high-voltage electrical power system (700).

2. The method according to claim 1, wherein the micro-structure (20) has an average roughness, Ra, of less than 10 µm.

3. The method according to any of claims 1 to 2, wherein said electrically conductive substrate (12) is a core conductor adapted for carrying a nominal current in a high-voltage electrical power system (700), the nominal current being, in embodiments, a current between about 0.1 kA and about 250 kA.

4. The method according to any of claims 1 to 3, wherein the laser source (16) is a continuous laser source with an average power output of at least 20 Watts or a pulsed laser source with an average power output of at least 20 Watts, in particular with a pulse frequency of 40 kHz to 50 kHz.

5. The method according to any one of the preceding claims, wherein said non-metallic material (14) is electrically insulating, and in embodiments includes at least one of a polymeric composite or a thermoplastic material.

6. The method according to any one of the preceding claims, wherein said electrically conductive substrate (12) is an insert (12, 603) and wherein the non-metallic material (14) is bonded to the surface of the substrate such that the substrate is at least partially immersed in the non-metallic material (14).

7. An insulator-conductor assembly (26, 600) comprising
- an electrically conductive substrate (12) comprising a substrate surface (18) configured for bonding a non-metallic material (14) thereon, wherein said substrate surface (18) includes a laser induced micro-structure (20) obtainable by irradiation with a laser light (24), wherein the micro-structure (20) has at least one of:
a) an I/Ra ratio of at least 0.2 µm⁻¹, I being the surface index, Ra being the average roughness; or
b) an I/Rz ratio of at least 0.03 µm⁻¹, I being the surface index, Rz being the average peak-to-valley distance; and
- an insulator body (14, 602) of electrically insulating material bonded on the substrate surface (18), wherein
said non-metallic material (14) is bonded to the surface (18) of said electrically conductive substrate (12) by one of molding, painting, extruding, casting said non-metallic material (14), and wherein
said electrically conductive substrate (12) is a core conductor adapted for carrying a nominal current in a high-voltage electrical power system (700).

8. The insulator-conductor assembly according to claim 7, wherein the micro-structure has an average roughness, Ra, of less than 10 µm.

9. The insulator-conductor assembly according to any of claims 7 to 8, the nominal current being a current between 0.1 kA and about 250 kA.

10. The insulator-conductor assembly according to any one of claims 7 to 9, comprising a metal insert (12, 603) for use with a solid insulation component (704, 706, 712, 714) of a generator circuit breaker or a gas-insulated switchgear station (700), the metal insert including the electrically conductive substrate.

11. The insulator-conductor assembly (26, 600) according to any one of claims 7 to 10, wherein said insulator body (14, 602) includes at least one of a polymeric composite or a thermoplastic material.

12. The insulator-conductor assembly (26, 600) according to any of claims 7 to 11, wherein said electrically conductive substrate (12, 603) is an insert and wherein the insulator body (14, 602) is bonded to the surface of the substrate such that the substrate is at least partially immersed in the insulator body (14).

13. The insulator-conductor assembly (26, 600) according to any of claims 7 to 12, wherein said assembly (26, 600) is adapted for use as a solid insulation component (704, 706, 712, 714) of an electrical power transmission system (700) such as, for example, a generator circuit breaker or a gas-insulated switchgear station, the electrically conductive substrate (12, 603) constituting a metal insert, and the insulator body (14, 602) constituting an insulator body.

14. The insulator-conductor assembly (26) according to any of claims 7 to 13, wherein the assembly has at least one of a tensile strength of at least 60 MPa, a shear strength of at least 10 MPa, or a surface energy of said surface (18) of at least 25 mN/m.

15. A gas-insulated switchgear station (700) comprising the insulator-conductor assembly (26, 600) according to any of claims 7 to 14, the electrically conductive substrate (12, 603) being configured for carrying an interruption current during a current interruption event.

16. The gas-insulated switchgear station (700) according to claim 15, wherein said switchgear station is configured for interrupting a fault current between 40 kA and 600 kA.

## Patentansprüche

1. Verfahren zum Herstellen einer Leiteranordnung (26), wobei die Leiteranordnung ein elektrisch leitendes Substrat (12) und ein nicht-metallisches Material (14) einschließt, wobei das Verfahren umfasst:
- Vorbehandeln des elektrisch leitenden Substrats (12) durch Platzieren des Substrats (12) in einem Laserbereich einer Laserquelle (16) und durch Bestrahlen einer Oberfläche (18) des Substrats (12) mit einem Laserlicht (24) aus der Laserquelle (16), wodurch eine Mikrostruktur (20) auf der Substratoberfläche (18) gebildet wird, wobei die Mikrostruktur (20) mindestens eines der folgenden aufweist:
a) ein I/Ra-Verhältnis von mindestens 0,2 µm⁻¹, wobei I der Oberflächenindex ist, Ra die durchschnittliche Rauheit ist; oder
b) ein I/Rz-Verhältnis von mindestens 0,03 µm⁻¹, wobei I der Oberflächenindex ist, Rz die durchschnittliche Spitze-Tal-Distanz ist; und
- Bonden des nicht-metallischen Materials (14) an die Oberfläche (18) des elektrisch leitenden Substrats (12), wobei das Bonden eines von Formen, Anstreichen, Extrudieren, Gießen des nicht-metallischen Materials (14) auf das elektrisch leitende Substrat (12) einschließt, wobei
das elektrisch leitende Substrat (12) ein Kernleiter ist, der vorgesehen ist, einen Nennstrom in einem elektrischen Hochspannungsversorgungssystem (700) zu führen.

2. Verfahren nach Anspruch 1, wobei die Mikrostruktur (20) eine durchschnittliche Rauheit, Ra, von weniger als 10 µm aufweist.

3. Verfahren nach einem der Ansprüche 1 bis 2, wobei das elektrisch leitende Substrat (12) ein Kernleiter ist, der vorgesehen ist, einen Nennstrom in einem Hochspannungsversorgungssystem (700) zu führen, wobei der Nennstrom in Ausführungen ein Strom zwischen etwa 0,1 kA und etwa 250 kA ist.

4. Verfahren nach einem der Ansprüche 1 bis 3, wobei die Laserquelle (16) eine kontinuierliche Laserquelle mit einer durchschnittlichen Leistungsabgabe von mindestens 20 Watt oder eine gepulste Laserquelle mit einer durchschnittlichen Leistungsabgabe von mindestens 20 Watt ist, insbesondere mit einer Pulsfrequenz von 40 kHz bis 50 kHz.

5. Verfahren nach einem der vorhergehenden Ansprüche, wobei das nicht-metallische Material (14) elektrisch isolierend ist und in Ausführungsformen mindestens eines von einem polymeren Verbundwerkstoff oder einem thermoplastischen Material einschließt.

6. Verfahren nach einem der vorhergehenden Ansprüche, wobei das elektrisch leitende Substrat (12) ein Einsatz (12, 603) ist und wobei das nicht-metallische Material (14) derart an die Oberfläche des Substrats gebondet ist, dass das Substrat mindestens teilweise in das nicht-metallische Material (14) eintaucht.

7. Isolator-Leiter-Anordnung (26, 600), umfassend
- ein elektrisch leitendes Substrat (12), umfassend eine Substratoberfläche (18), die zum Bonden eines nicht-metallischen Materials (14) darauf konfiguriert ist, wobei die Substratoberfläche (18) eine laserinduzierte Mikrostruktur (20) einschließt, die durch Bestrahlung mit einem Laserlicht (24) erhältlich ist, wobei die Mikrostruktur (20) mindestens eines der folgenden aufweist:
a) ein I/Ra-Verhältnis von mindestens 0,2 µm⁻¹, wobei I der Oberflächenindex ist, Ra die durchschnittliche Rauheit ist; oder
b) ein I/Rz-Verhältnis von mindestens 0,03 µm⁻¹, wobei I der Oberflächenindex ist, Rz die durchschnittliche Spitze-Tal-Distanz ist; und
- einen Isolatorkörper (14, 602) aus elektrisch isolierendem Material, gebondet an die Substratoberfläche (18), wobei
das nicht-metallische Material (14) durch mindestens eines von Formen, Anstreichen, Extrudieren, Gießen des nicht-metallischen Materials (14) an die Oberfläche (18) des elektrisch leitenden Substrats (12) gebondet ist, und wobei
das elektrisch leitende Substrat (12) ein Kernleiter ist, der vorgesehen ist, einen Nennstrom in einem elektrischen Hochspannungsversorgungssystem (700) zu führen.

8. Isolator-Leiter-Anordnung nach Anspruch 7, wobei die Mikrostruktur eine durchschnittliche Rauheit, Ra, von weniger als 10 µm aufweist.

9. Isolator-Leiter-Anordnung nach einem der Ansprüche 7 bis 8, wobei der Nennstrom ein Strom zwischen 0,1 kA und etwa 250 kA ist.

10. Isolator-Leiter-Anordnung nach einem der Ansprüche 7 bis 9, umfassend einen Metalleinsatz (12, 603) zur Verwendung mit einer festen Isolierkomponente (704, 706, 712, 714) eines Generatorschalters oder einer gasisolierten Schaltanlagenstation (700), wobei der Metalleinsatz das elektrisch leitende Substrat einschließt.

11. Isolator-Leiter-Anordnung (26, 600) nach einem der Ansprüche 7 bis 10, wobei der Isolatorkörper (14, 602) mindestens eines von einem polymeren Verbundwerkstoff oder einem thermoplastischen Material einschließt.

12. Isolator-Leiter-Anordnung (26, 600) nach einem der Ansprüche 7 bis 11, wobei das elektrisch leitende Substrat (12, 603) ein Einsatz ist und wobei der Isolatorkörper (14, 602) derart an die Oberfläche des Substrats gebondet ist, dass das Substrat mindestens teilweise in den Isolatorkörper (14) eintaucht.

13. Isolator-Leiter-Anordnung (26, 600) nach einem der Ansprüche 7 bis 12, wobei die Anordnung (26, 600) zur Verwendung als feste Isolierkomponente (704, 706, 712, 714) eines elektrischen Energieübertragungssystems (700) vorgesehen ist, wie beispielsweise einem Generatorschalter oder einer gasisolierten Schaltanlagenstation, wobei das elektrisch leitende Substrat (12, 603) einen Metalleinsatz darstellt und der Isolatorkörper (14, 602) einen Isolatorkörper darstellt.

14. Isolator-Leiter-Anordnung (26) nach einem der Ansprüche 7 bis 13, wobei die Anordnung mindestens eine von einer Zugfestigkeit von mindestens 60 MPa, einer Scherfestigkeit von mindestens 10 MPa oder einer Oberflächenenergie der Oberfläche (18) von mindestens 25 mN/m aufweist.

15. Gasisolierte Schaltanlagenstation (700), umfassend die Isolator-Leiter-Anordnung (26, 600) nach einem der Ansprüche 7 bis 14, wobei das elektrisch leitende Substrat (12, 603) zum Führen eines Unterbrechungsstroms während eines Stromunterbrechungsereignisses konfiguriert ist.

16. Gasisolierte Schaltanlagenstation (700) nach Anspruch 15, wobei die Schaltanlagenstation konfiguriert ist, um einen Fehlerstrom zwischen 40 kA und 600 kA zu unterbrechen.

## Revendications

1. Procédé de fabrication d'un ensemble conducteur (26), ledit ensemble conducteur comprenant un substrat électriquement conducteur (12) et un matériau non métallique (14), ledit procédé comprenant les étapes suivantes :
- prétraiter ledit substrat électriquement conducteur (12) en plaçant le substrat (12) à portée de laser d'une source laser (16), et en irradiant une surface (18) du substrat (12) avec une lumière laser (24) issue de la source laser (16), formant ainsi une microstructure (20) sur la surface du substrat (18), où la microstructure (20) présente au moins une caractéristique parmi :
a) un rapport I/Ra d'au moins 0,2 µm⁻¹, I étant l'indice de surface, Ra étant la rugosité moyenne ; ou
b) un rapport I/Rz d'au moins 0,03 µm⁻¹, I étant l'indice de surface, Rz étant la distance moyenne de pic à vallée ; et
- coller ledit matériau non métallique (14) à la surface (18) dudit substrat électriquement conducteur (12), où le collage comprend une des opérations suivantes : mouler, peindre, extruder, fondre ledit matériau non métallique (14) sur ledit substrat électriquement conducteur (12), où :
ledit substrat électriquement conducteur (12) est un conducteur central adapté pour acheminer un courant nominal dans un système d'alimentation électrique haute tension (700).

2. Procédé selon la revendication 1, dans lequel la microstructure (20) a une rugosité moyenne Ra inférieure à 10 µm.

3. Procédé selon la revendication 1 ou la revendication 2, dans lequel ledit substrat électriquement conducteur (12) est un conducteur central adapté pour acheminer un courant nominal dans un système d'alimentation électrique haute tension (700), le courant nominal étant, dans des modes de réalisation, un courant compris entre environ 0,1 kA et environ 250 kA.

4. Procédé selon l'une quelconque des revendications 1 à 3, dans lequel la source laser (16) est une source laser continue avec une sortie de puissance moyenne d'au moins 20 watts ou une source de laser pulsé ayant une sortie de puissance moyenne d'au moins 20 watts, en particulier avec une fréquence d'impulsion de 40 kHz à 50 kHz.

5. Procédé selon l'une quelconque des revendications précédentes, dans lequel ledit matériau non métallique (14) est électriquement isolant et, dans des modes de réalisation, comprend au moins un matériau parmi un polymère composite ou un matériau thermoplastique.

6. Procédé selon l'une quelconque des revendications précédentes, dans lequel ledit substrat électriquement conducteur (12) est un insert (12, 603), et dans lequel le matériau non métallique (14) est collé à la surface du substrat de manière à ce que le substrat soit au moins partiellement immergé dans le matériau non métallique (14).

7. Ensemble isolant-conducteur (26, 600), comprenant :
- un substrat électriquement conducteur (12) comprenant une surface de substrat (18) configurée pour y coller un matériau non métallique (14), où ladite surface de substrat (18) comprend une microstructure induite par laser (20) pouvant être obtenue par irradiation avec une lumière laser (24), où la microstructure (20) présente au moins une caractéristique parmi :
a) un rapport I/Ra d'au moins 0,2 µm⁻¹, I étant l'indice de surface, Ra étant la rugosité moyenne ; ou
b) un rapport I/Rz d'au moins 0,03 µm⁻¹, I étant l'indice de surface, Rz étant la distance moyenne de pic à vallée ; et
- un corps d'isolant (14, 602) de matériau électriquement isolant collé sur la surface du substrat (18), où ledit matériau non métallique (14) est collé à la surface (18) dudit substrat électriquement conducteur (12) au moyen d'un des procédés suivants : moulage, peinture, extrudage, fonte dudit matériau non métallique (14), et où
ledit substrat électriquement conducteur (12) est un conducteur central adapté pour acheminer un courant nominal dans un système d'alimentation électrique haute tension (700).

8. Ensemble isolant-conducteur selon la revendication 7, dans lequel la microstructure a une rugosité moyenne Ra inférieure à 10 µm.

9. Ensemble isolant-conducteur selon l'une quelconque des revendications 7 à 8, le courant nominal étant un courant compris entre environ 0,1 kA et environ 250 kA.

10. Ensemble isolant-conducteur selon l'une quelconque des revendications 7 à 9, comprenant un insert métallique (12, 603) à utiliser avec un composant d'isolation solide (704, 706, 712, 714) d'un disjoncteur de générateur ou d'une station d'appareillage de commutation à isolation gazeuse (700), l'insert métallique comprenant le substrat électriquement conducteur.

11. Ensemble isolant-conducteur (26, 600) selon l'une quelconque des revendications 7 à 10, dans lequel ledit corps isolant comprend au moins un matériau parmi un polymère composite ou un matériau thermoplastique.

12. Ensemble isolant-conducteur (26, 600) selon l'une quelconque des revendications 7 à 11, dans lequel ledit substrat électriquement conducteur (12, 603) est un insert, et dans lequel le corps isolant (14, 602) est collé à la surface du substrat de manière à ce que le substrat soit au moins partiellement immergé dans le matériau non métallique (14).

13. Ensemble isolant-conducteur (26, 600) selon l'une quelconque des revendications 7 à 12, dans lequel ledit ensemble (26, 600) est adapté pour être utilisé en tant que composant d'isolation solide (704, 706, 712, 714) d'un système de transmission de puissance électrique (700) comme, par exemple, un disjoncteur de générateur ou une station d'appareillage de commutation à isolation gazeuse, le substrat électriquement conducteur (12, 603) constituant un insert métallique, et le corps d'isolant (14, 602) constituant un corps d'isolant.

14. Ensemble isolant-conducteur (26) selon l'une quelconque des revendications 7 à 13, dans lequel l'ensemble a au moins une caractéristique parmi une résistance à la traction d'au moins 60 MPa, une résistance au cisaillement d'au moins 10 MPa, ou une énergie de surface de ladite surface (18) d'au moins 25 mN/m.

15. Station d'appareillage de commutation à isolation gazeuse (700) comprenant l'ensemble isolant-conducteur (26, 600) selon l'une quelconque des revendications 7 à 14, le substrat électriquement conducteur (12, 603) étant configuré pour acheminer un courant d'interruption au cours d'un événement d'interruption de courant.

16. Station d'appareillage de commutation à isolation gazeuse (700) selon la revendication 15, dans laquelle ladite station d'appareillage de commutation est configurée pour interrompre un courant de défaut compris entre 40 kA et 600 kA.
